# EUROPEAN PATENT SPECIFICATION

(11) **EP 1 690 583 B1**
(45) Date of publication and mention of the grant of the patent: **22.04.2009**
(21) Application number: 04792912.0
(22) Date of filing: 25.10.2004
(51) Int. Cl.: B01D 39/16

(54) **FRICTION-CHARGED FILTER MATERIAL**
REIBUNGSGELADENES FILTERMATERIAL
MATERIAU DE FILTRE A CHARGE DE FRICTION

(30) Priority: 11.11.2003 JP 2003380714; 29.06.2004 JP 2004191061
(43) Date of publication of application: 16.08.2006
(73) Proprietor: Toyo Boseki Kabushiki Kaisha, Osaka-shi, Osaka 530-8230 (JP)
(72) Inventor: TOKUDA, Shoji, c/o Toyo Boseki Kabushiki Kaisha, Ohtsu-shi, Shiga 520-0292 (JP); IMAGAWA, Masayuki, c/o Toyo Boseki Kabushiki Kaisha, Ohtsu-shi,Shiga 520-0292 (JP)
(74) Representative: Müller-Boré & Partner Patentanwälte
(86) International application number: PCT/JP2004/015775
(87) International publication number: WO 2005/044421

(56) References cited:
- JP-A- 11 047 521
- JP-A- 2000 290 834
- JP-A- 2002 212 439
- JP-A- 2002 316 010
- JP-A- 2002 348 480
- JP-A- 2003 512 147

## Description

### TECHNICAL FIELD

The present invention relates to a friction-charged filter material and in particular to a charged filter material used in an air filter, a mask etc. in automobile compartments, office instruments, living spaces and the like. The present invention also relates to a friction-charged filter material which is self-extinguishing in the combustibility classification according to JIS D 1201 (1977) "method of combustibility test for organic materials disposed in automobile compartment".

### BACKGROUND ART

A wide variety of air filters have been proposed as those capturing fine particles in the air. Particularly, a friction-charged filter material composed by mixing a plurality of different kinds of fibers have attracted attention as a filter material exhibiting relatively high particle collection efficiency with low pressure loss, and filter materials composed of various fiber combinations have been proposed in prior arts, for example, USP No. 4,798,850, JP 2000-170068(A), and JP 2003-512147(A).

These literatures disclose filter materials obtained from a combination of polyolefin fiber and modacrylic fiber, acrylic fiber or polyester fiber by removing a lubricant from the fibers to clean their surface and then friction-charging the fibers. In any of these literatures, however, there is no description of the combustibility of the filter material. Depending on applications, there are cases where self-extinguishing properties are necessary. For example, when the filter material is used in an air-cleaning unit in an automobile compartment, it is essential that the combustibility classification according to JIS D 1201 (1977) "method of combustibility test for organic materials disposed in automobile compartment" is self-extinguishing. However, the combination of polyolefin fiber and acrylic fiber in the fiber constitution disclosed in the patent literatures supra is not self-extinguishing because of the extremely high combustibility of the acrylic fiber although the filtration performance of this combination is high. The combination of polyolefin fiber and modacrylic fiber exhibits self-extinguishing properties, but the modacrylic fiber contains chlorine and may generate toxic dioxins at the time of incineration, thus making it environmentally unfavorable.

The combination of polyolefin fiber and standard aromatic polyester fiber (referred to hereinafter as "standard polyester fiber") is less combustible than the combination of polyolefin fiber and acrylic fiber, but is not always self-extinguishing and also has a problem of inferior filtration performance. JP 2003-512147(A) supra discloses a filter material composed of polyolefin fiber and polyester fiber, but the charging properties thereof cannot be said to be satisfactory, and the efficiency of collection of fine particles particularly having a diameter of about 0.3 µ is not satisfactory, and there is no description of structure of polyester for exhibiting high filtration performance and self-distinguishing properties.

JP 2002-348480 (A) discloses a non-flammable electret material, which is obtained by copolymerising a thermoplastic resin (e.g. polyester) with an alkylphosphinic acid compound.

### DISCLOSURE OF INVENTION

The present invention provides a charged filter material composed of a combination of polyester fiber and polyolefin fiber which is capable of exhibiting high particle collection efficiency with low pressure loss, and further provides a charged filter material which is self-extinguishing in the combustibility classification according to JIS D 1201 (1977) "method of combustibility test for organic materials disposed in automobile compartment" and which does not generate dioxins at the time of incineration.

The present invention provides a friction-charged filter material comprising at least 20 mass% of polyester fiber containing a phosphinic acid compound and/or sulfonic acid compound and at least 30 mass% of polyolefin fiber.

The friction-charged filter material of the present invention is characterized in that the polyester fiber comprises a phosphinic acid compound and/or sulfonic acid compound copolymerized with a polyester molecular chain.

The friction-charged filter material of the present invention is characterized in that the filter material is self-extinguishing in the combustibility classification according to JIS D 1201 (1977) method of combustibility test for organic materials disposed in automobile compartment.

The friction-charged filter material of the present invention can exhibit high particle collection efficiency with low pressure loss. Further, the friction-charged filter material is a combination of polyester fiber containing a phosphinic acid compound and/or sulfonic acid compound and polyolefin fiber, and the filter material is thus excellent in friction-charging properties and is simultaneously capable of easily achieving self-extinguishing properties according to JIS D 1201 (1977) "method of combustibility test for organic materials disposed in automobile compartment" depending on necessity, thus providing a friction-charged filter material applicable to an air filter requiring self-extinguishing properties. In addition, the filter material of the present invention does not generate dioxins at the time of incineration and is thus a filter material with fewer burdens on the environment.

### BEST MODE FOR CARRYING OUT THE INVENTION

Hereinafter, the present invention is described in more detail.

The charged filter material of the present invention is a charged filter material containing a plurality of combined fiber components, which comprises, as constituent fiber, polyester fiber containing a phosphinic acid compound and/or sulfonic acid compound and polyolefin fiber.

The phosphinic acid compound in the present invention is a compound represented by the following general formula (1): 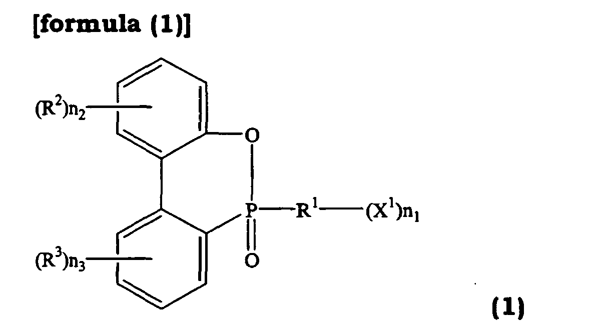 wherein X¹ represents an ester-forming functional group, R¹ represents a lower alkylene group or an arylene group, R² and R³ are the same or different and each represent a C1 to C10 hydrocarbon group, n₁ represents an integer of 1 or 2, and n₂ and n₃ each represent an integer of 0 to 4.

The sulfonic acid compound in the present invention is a metal sulfonate represented by the following general formula (2) or a phosphonium sulfonate represented by the following general formula (3). 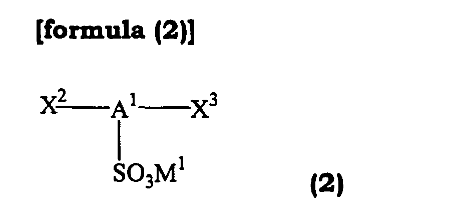 wherein X² represents an ester-forming functional group, X³ represents a hydrogen atom or an ester-forming functional group which is identical with or different from X², A¹ represents an aromatic or aliphatic group, and M¹ represents an alkali metal or an alkaline earth metal. 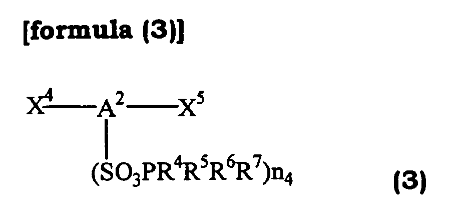 wherein X⁴ represents an ester-forming functional group, X⁵ represents a hydrogen atom or an ester-forming functional group which is identical with or different from X⁴, A² represents an aromatic or aliphatic group, R⁴, R⁵, R⁶ and R⁷ each represent hydrogen or the same or different group selected from an alkyl group, an aryl group and a hydroxyalkyl group, and n₄ represents an integer of 1 or 2.

In the present invention, specific examples of X¹ in the general formula (1) above include a carboxyl group, an alkyl ester whose carboxyl group contains 1 to 6 carbon atoms, a cycloalkyl ester, an aryl ester, a hydroxyl group, and a C2 to C7 hydroxylalkoxycarbonyl group. Preferable examples of R¹ include a lower alkylene group such as methylene, ethylene, 1,2-propylene and 1,3-propylene and an arylene group such as 1,3-phenylene and 1,4-phenylene. Preferable examples of R² and R³ include a C1 to C6 alkyl group, a cycloalkyl group, an aryl group, and the monovalent group represented by the above-mentioned X¹.

Specific examples of the phosphinic acid compound represented by the general formula (1) above include 9,10-dihydro-9-oxa-10-phosphaphenanthrene-10-oxide (HCA) and the compounds represented by the following chemical formulae (a) to (z):

### [formulae (a)-(z)]

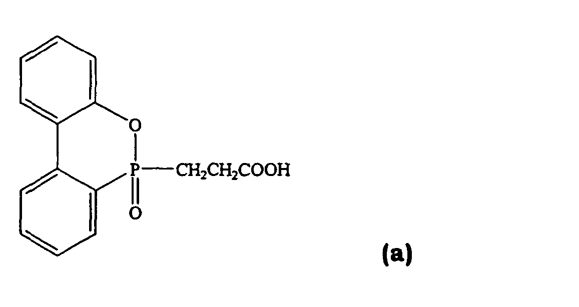

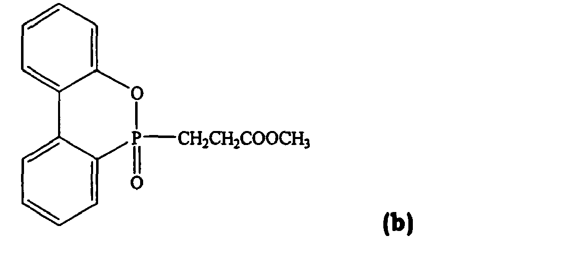

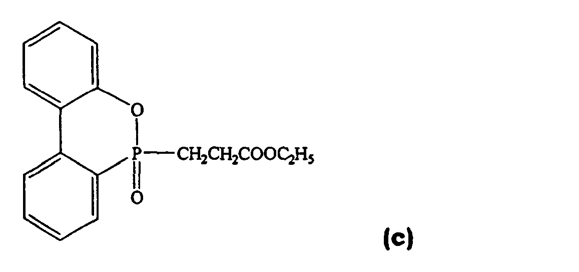

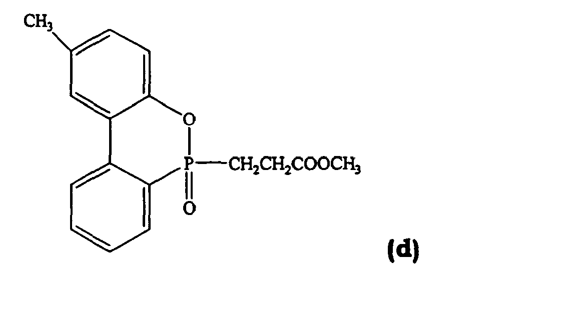

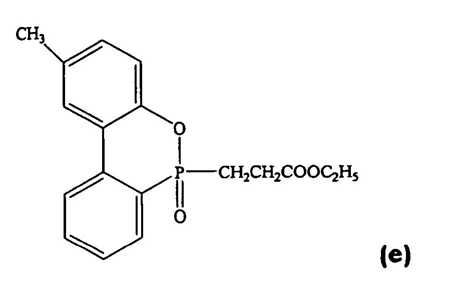

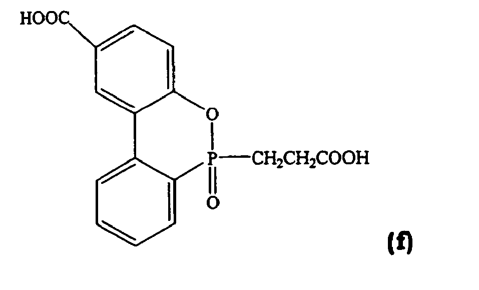

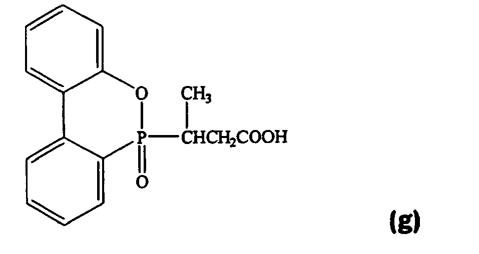

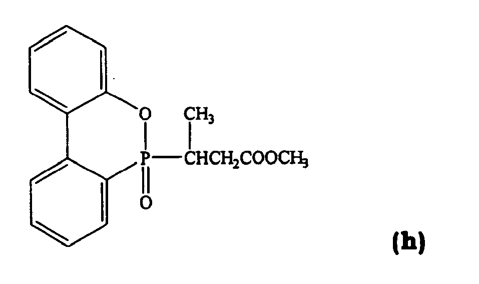

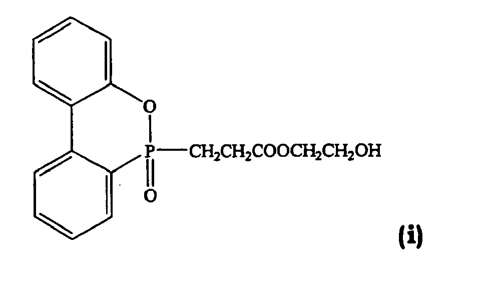

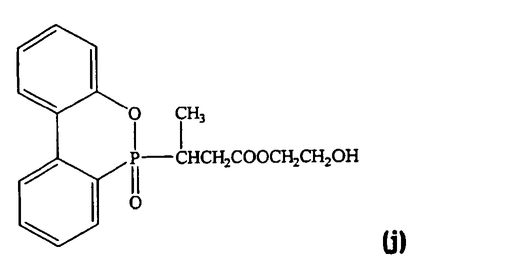

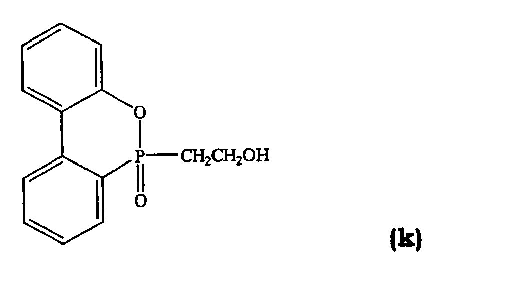

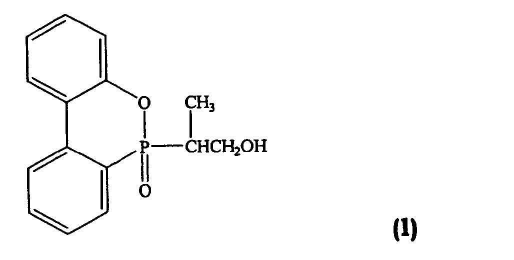

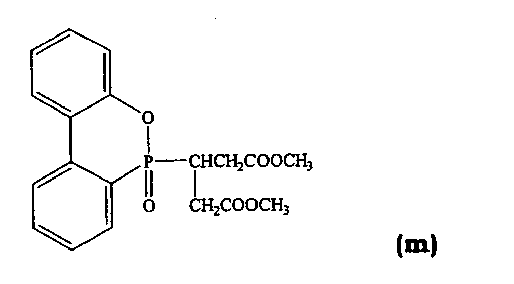

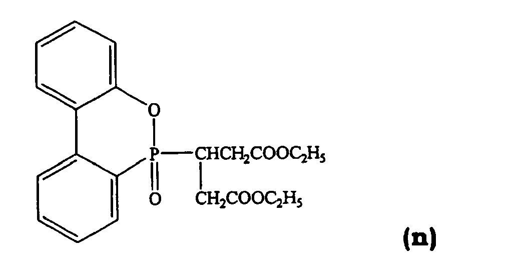

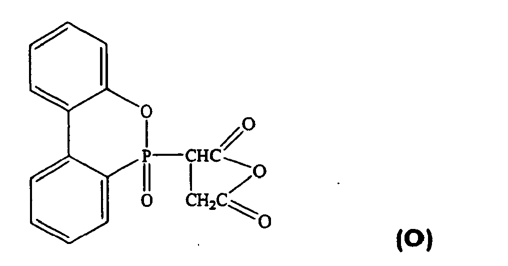

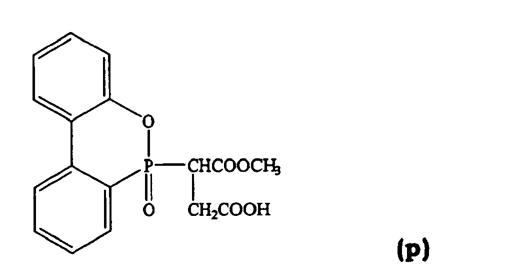

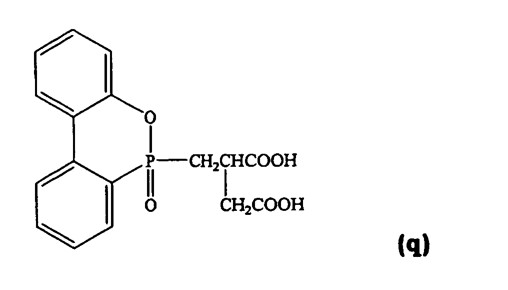

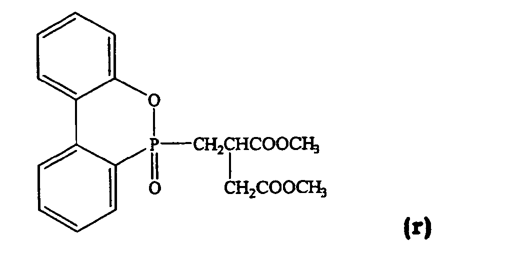

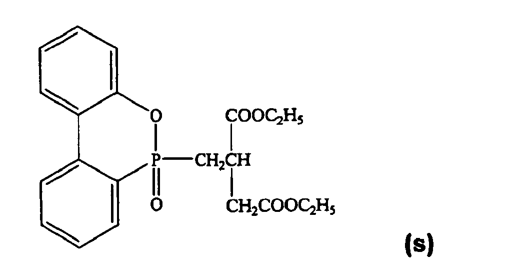

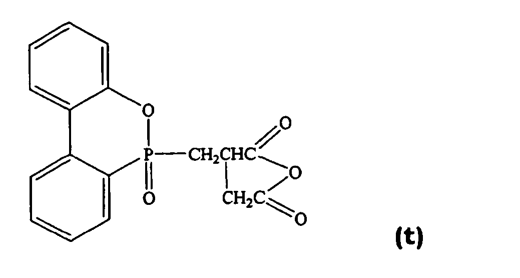

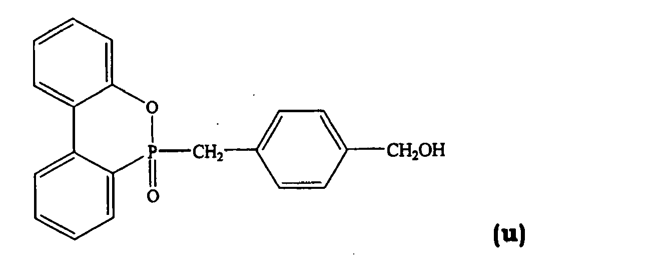

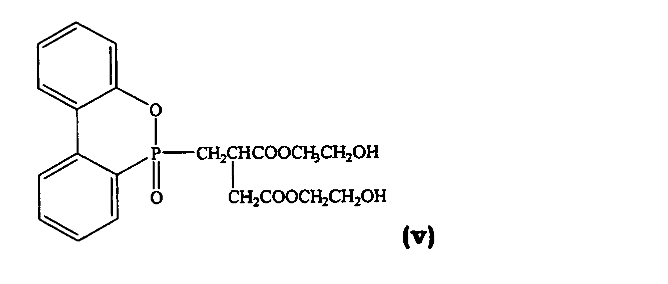

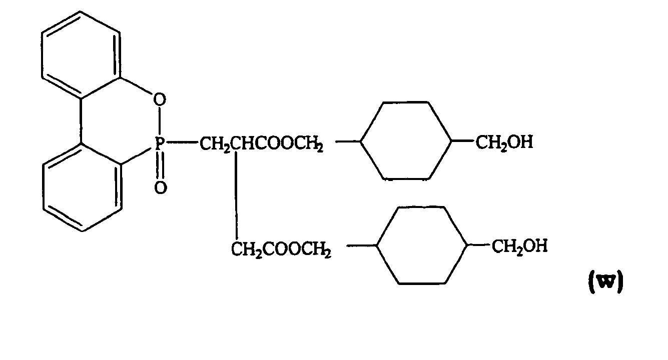

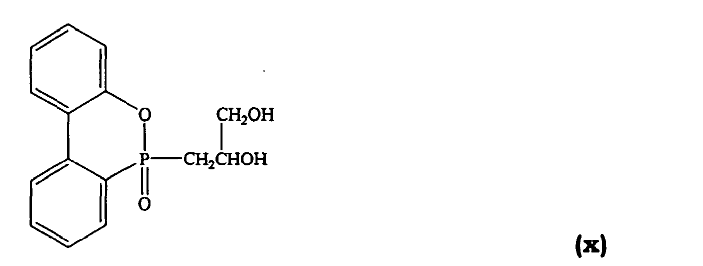

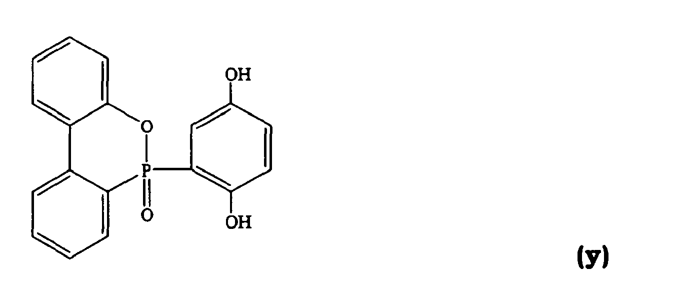

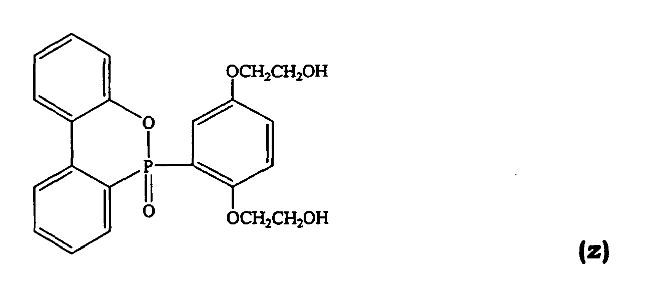

In addition to those described above, compounds represented by the following formula (4) and carboxyphosphinic acid represented by the following general formula (5) and derivatives thereof are also effective as the phosphinic acid compound. 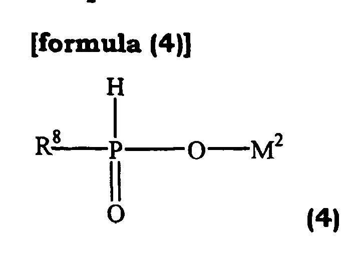 wherein R⁸ represents a C1 to C22 alkyl group, a phenyl group, a naphthyl group or an anthracene group, and M² represents a metal ion, an ammonium ion or a phosphonium ion.

Specific examples of the compounds represented by the general formula (4) include sodium phenylphosphinate, potassium phenylphosphinate, lithium phenylphosphinate, calcium phenylphosphinate, magnesium phenylphosphinate, etc. 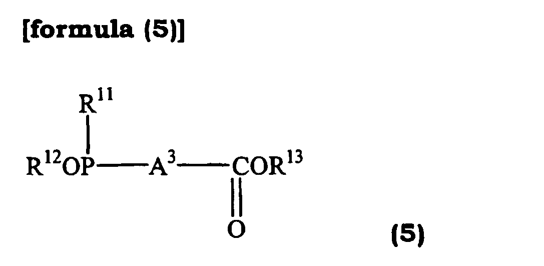 wherein R¹¹ represents a C4 or more branched alkyl group or an aromatic group, R¹² and R¹³ may be the same or different and each represent a hydrogen atom or a C1 to C6 monovalent organic group or an organic group having a hydroxyl group, and A³ represents a divalent or trivalent organic residue.

Specific examples of the carboxyphosphinic acid represented by the general formula (5) and derivatives thereof include (2-carboxyethyl) phenylphosphinic acid, (2-carboxyethyl)-tert butylphosphinic acid, (2-carboxyethyl) 1,1-dimethylhexylphosphinic acid, (2-carboxyethyl) naphthylphosphinic acid, (2-carboxyethyl) toluylphosphinic acid, (2-carboxyethyl) 2,5-dimethylphenylphosphinic acid, (2-carboxyethyl) cyclohexylphosphinic acid, (2-carboxyethyl)-4-chlorophenylphosphinic acid, (4-carboxyphenyl) phenylphosphinic acid, (3-carboxyphenyl) phenylphosphinic acid, carboxymethylphenylphosphinic acid, carboxymethylnaphthylphosphinic acid, and lower alcohol esters , lower alcohol diesters and cyclic anhydrides thereof.

In the sulfonic acid compound represented by the general formula (2) in the present invention, X² represents an ester-forming functional group, and X³ represents a hydrogen atom or an ester-forming functional group identical with or different from X². Specific examples of the ester-forming functional group include -COOH, -COOR, -OH and -OR wherein R is a lower alkyl group or a phenyl group. The lower alkyl group represented by R is preferably for example a C1 to C4 linear or branched group. A¹ represents an aromatic or aliphatic group and is particularly preferably an aromatic group. M¹ represents an alkali metal or an alkaline earth metal, and examples of the alkali metal include sodium, potassium and lithium, and examples of the alkaline earth metal include calcium and magnesium.

The sulfonic acid compound represented by the general formula (2) may be added as a reaction product with glycol. Particularly preferable examples of the sulfonic acid compound include 5-sodium sulfoisophthalic acid (and its methyl ester, ethylene glycol ester), m-sodium sulfobenzoic acid (and its methyl ester, ethylene glycol ester), p-sodium sulfobenzoic acid (and its methyl ester, ethylene glycol ester), o-sodium sulfobenzoic acid (and its methyl ester, ethylene glycol ester), 4-hydroxy-3-sodium sulfobenzoic acid (and its methyl ester, ethylene glycol ester), 3-hydroxy-4-sodium sulfobenzoic acid (and its methyl ester, ethylene glycol ester), 3-sodium sulfosalicylic acid (and its methyl ester, ethylene glycol ester), etc.

In the present invention, X⁴ in the general formula (3) represents an ester-forming functional group, and X⁵ represents a hydrogen atom or an ester-forming functional group identical with or different from X⁴. Specific examples of the ester-forming functional group include -COOH, -COOR, -OH and -OR wherein R is a lower alkyl group or a phenyl group. The lower alkyl group represented by R is preferably for example a C1 to C4 linear or branched group. A¹ represents an aromatic or aliphatic group, and is particularly preferably an aromatic group.

R⁴, R⁵, R⁶ and R⁷ each represent the same or different group selected from the group consisting of hydrogen, an alkyl group, an aryl group and a hydroxyalkyl group. Such phosphonium sulfonate can be easily synthesized generally by reacting the corresponding sulfonic acid with phosphine or by reacting the corresponding metal sulfonate with phosphonium halide.

The phosphonium sulfonate represented by the general formula (3) may be added as a reaction product with glycol. Preferable examples of such phosphonium sulfonate include tetrabutyl phosphonium 3,5-dicarboxybenzene sulfonate, ethyl tributyl phosphonium 3,5-dicarboxy benzene sulfonate, benzyl tributyl phosphonium 3,5-dicarboxy benzene sulfonate, phenyl tributyl phosphonium 3,5-dicarboxy benzene sulfonate, tetraphenyl phosphonium 3,5-dicarboxy benzene sulfonate, ethyl triphenyl phosphonium 3,5-dicarboxy benzene sulfonate, butyl triphenyl phosphonium 3,5-dicarboxy benzene sulfonate, benzyl triphenyl phosphonium 3,5-dicarboxy benzene sulfonate, tetrabutyl phosphonium 3,5-dicarbomethoxy benzene sulfonate, ethyl tributyl phosphonium 3,5-dicarbomethoxy benzene sulfonate, benzyl tributyl phosphonium 3,5-dicarboxy benzene sulfonate, tetrabutyl phosphonium 3-carbomethoxy benzene sulfonate, tetraphenyl phosphonium 3-carbomethoxy benzene sulfonate, tetrabutyl phosphonium 3,5-di(β-hydroxyethoxycarbonyl) benzene sulfonate, tetraphenyl phosphonium 3,5-di(β-hydroxyethoxycarbonyl) benzene sulfonate, tetrabutyl phosphonium 3-(β-hydroxyethoxycarbonyl) benzene sulfonate, tetraphenyl phosphonium 3-(β-hydroxyethoxycarbonyl) benzene sulfonate, tetrabutyl phosphonium 4-hydroxyethoxy benzene sulfonate, tetrabutyl phosphonium 2,6-dicarboxy naphthalene-4-sulfonate, and α-tetrabutyl phosphonium succinic acid. The phosphonium sulfonates exemplified above may be used as a mixture of two or more thereof.

In another preferable mode, the phosphinic acid compound in the present invention is (2-carboxyethyl) phenylphosphinic acid.

In the present invention, the phosphinic acid compound and/or sulfonic acid compound is preferably copolymerized with a polyester molecular chain. The polyester molecular chain is obtained from a dicarboxylic acid component, 80% or more of which is terephthalic acid or its ester-forming derivative, and a glycol component, 80% or more of which is at least one kind of alkylene glycol selected from ethylene glycol, trimethylene glycol and tetramethylene glycol or their ester-forming derivative. With respect to the content of the phosphinic acid compound and/or the sulfonic acid compound in the copolymer, the content of the phosphinic acid compound and/or the sulfonic acid compound in the whole carboxylic acid component is 0.5 to 5 mol%, preferably 1 to 3 mol%. Both the phosphinic acid compound and the sulfonic acid compound may be present in the same polyester molecular chain. In production of the copolymer polyester, a conventionally known catalyst and reaction conditions can be used for the transesterification reaction and polycondensation reaction. Using the copolymer polyester resin as the starting material, short fibers can be produced in a usual method.

The copolymer polyester fiber is mixed with the polyolefin fiber, and the fibers are charged by rubbing them against one another in a suitable method, and this charging level is extremely high as compared with the case of using the standard polyester fiber. Accordingly, the friction-charged filter material of the present invention is characterized in that it is superior in filtration performance to a filter material composed of the standard polyester fiber and polyolefin fiber.

The copolymer polyester fiber is superior in flame retardancy to the standard polyester fiber. It is considered that the phosphinic acid compound and/or sulfonic acid compound is contained in the polymer, thereby exhibiting dripping property at the time of combustion, thus contributing to flame retardancy. Accordingly, the friction-charged filter material of the present invention can be easily made self-extinguishing in the combustibility classification according to JIS D 1201 (1977) "method of combustibility test for organic materials disposed in automobile compartment".

Examples of the polyolefin fiber in the present invention include polyethylene fiber, polypropylene fiber, and polyethylene-polypropylene composite fiber, among which the polypropylene fiber is preferable. These polyolefin fibers may contain a flame-retardant agent.

An increase in the frequency of friction between different fibers and an increase in the amount of charge generated by the contact are considered effective in generally improving the charging level by friction in the friction-charged filter material. With respect to the latter, mixing and friction of the copolymer polyester fiber and the polyolefin fiber result to increase charge level as described above. With respect to the former, there is the optimum range for the mixing ratio of the polyester fiber to the polyolefin fiber, and in a ratio outside of the optimum range, the charging level will not be increased. -

It follows that in the friction-charged filter material of the present invention, the polyester fiber containing the phosphinic acid compound and/or the sulfonic acid compound should be contained in an amount of 20 mass% or more based on the whole constituent fibers. When the content of the polyester fiber is less than 20 mass%, the highly charging effect and flame-retardant effect are not sufficient. The content of the polyester fiber is preferably 30 to 70 mass%.

In the charged filter material of the present invention, the content of the polyolefin fiber should be 30 mass% or more based on the whole constituent fibers, and is preferably 30 to 70 mass%, in order to exhibit the charging effect by friction.

The friction-charged filter material of the present invention may contain other fibers in addition to the polyester fiber containing the phosphinic acid compound and/or the sulfonic acid compound and the polyolefin fiber. The fibers are preferably standard polyester fiber, polylactic acid fiber, acrylic fiber etc.

Hereinafter, the preferable method of producing the friction-charged filter material of the present invention is described. First, a plurality of fiber components containing the above fibers are subjected to fiber blending in a predetermined ratio by mass and then to carding to produce a fiber-blended web. Then, a lubricant on the surface of the fibers in the form of web is removed. As the specific method of removing the lubricant, there is a method wherein the web is dipped in a bath of a solvent, a surfactant or the like and then rinsed or a method wherein the web is sprayed with high-pressure water. Then, the dried web is subjected to friction to give a charged filter material. Examples of the method of friction treatment include a method wherein the filter material is geared between, and passed through, 2 gear rolls, thereby subjecting it to friction treatment and a method wherein the filter material is subjected to friction treatment and simultaneous entangling by utilizing needle punching. In these friction processes, the web may be stretched simultaneously with charging treatment, to regulate the predetermined fiber density, or may be laminate on a reinforcing material. Examples of the reinforcing material that can be used include conventionally known reinforcing materials such as a net, a span bond nonwoven fabric, a thermal bond nonwoven fabric and a paper manufactured in wet process.

### Examples

Hereinafter, the present invention is described in detail by reference to the Examples.

### (Production of copolymer polyester fiber)

### (Production Example 1)

194 parts by mass of dimethyl terephthalate (DMT), 124 parts by mass of ethylene glycol, and a phosphinic acid compound as the above compound (r) in an amount of 2 mol% relative to DMT were introduced into a reaction container, and zinc acetate and antimony trioxide in amounts of 0.1 and 0.02 mol% relative to DMT respectively were added thereto and the mixture was subjected to transesterification reaction under heating over 2 hours to 150 to 230°C in a nitrogen gas atmosphere. Then, this product was transferred to a polycondensation tank and subjected to polycondensation reaction for 5 hours at 280°C at a reduced pressure of 1 mmHg or less to give copolymer polyester resin. Using this resin as a starting material, 2.2-decitex short fiber A was prepared in a usual method.

### (Production Example 2)

194 parts by mass of dimethyl terephthalate (DMT), 124 parts by mass of ethylene glycol, and 5-sodium sulfoisophthalic acid ethylene glycol ester in an amount of 3 mol% relative to DMT were introduced into a reaction container, and zinc acetate and antimony trioxide in amounts of 0.1 and 0.02 mol% relative to DMT respectively were added thereto and the mixture was subjected to transesterification reaction under heating over 2 hours to 150 to 230°C in a nitrogen gas atmosphere. Then, this product was transferred to a polycondensation tank and subjected to polycondensation reaction for 5 hours at 280°C at a reduced pressure of 1 mmHg or less to give copolymer polyester resin. Using this resin as a starting material, 2.2-decitex short fiber B was prepared in usual method.

### (Production Example 3)

194 parts by mass of dimethyl terephthalate (DMT) and 124 parts by mass of ethylene glycol were introduced into a reaction container, and zinc acetate and antimony trioxide in amounts of 0.1 and 0.02 mol% relative to DMT respectively were added thereto and the mixture was subjected to transesterification reaction under heating over 3 hours to 150 to 230°C in a nitrogen gas atmosphere. Then, this product was transferred to a polycondensation tank, and then tetrabutyl phosphonium 3,5-di(β-hydroxyethoxycarbonyl) benzene sulfonate in an amount of 2 mol% relative to DMT was added thereto and subjected to polycondensation reaction for 5 hours at 280°C at a reduced pressure of 1 mmHg or less to give copolymer polyester resin. Using this resin as a starting material, 2.2-decitex short fiber C was prepared in a usual method.

### (Production Example 4)

1236 parts by mass of terephthalic acid, 62 parts by mass of (2-carboxyethyl) phenylphosphinic acid and 1055 parts by mass of ethylene glycol were introduced into a reaction container, and 0.55 parts by mass of antimony trioxide and 11 parts by mass of triethylamine were added thereto, and the mixture was subjected to esterification reaction for 2 hours while water formed by esterification was removed successively at 230°C at a gauge pressure of 2.5 kg/cm². Subsequently, the temperature of the system was increased over 1 hour to 275°C, during which the pressure in the system was gradually reduced to 0.1 mmHg, and under this condition, the mixture was subjected to polycondensation reaction for 2 hours. The [η] of the resulting copolymer polyester resin was 0.64, and the phosphorus content was 5900 ppm. This copolymer polyester resin was spun as a starting material and stretched to prepare 2.2-decitex short fiber D in a usual method.

### (Method of producing charged filter material)

The fibers in a predetermined mixing ratio by mass shown in Table 1 were subjected to fiber blending and carding to prepare a fiber-blended web with a fiber density of 100 g/m² and then sprayed continuously with high-pressure water at 3 MPa to remove a lubricant. The web was dried and then subjected to friction charging and simultaneous entangling by needle punching at a density of 50 needles/cm², to obtain a charged filter material sample. The temperature and humidity at the time of the needle punting treatment were 27°C and 55 RH%, respectively. The fibers shown in Table 1, which are other than A, B and C, are as follows:
NC: Polypropylene short fiber (2.2 dtex, 51 mm) manufactured by Ube-Nitto Kasei Co., Ltd.
707: Standard polyester fiber (2.2 dtex, 51 mm) manufactured by Toyo Boseki Kabushiki Kaisha
K8: Acrylic fiber (2.2 dtex, 51 mm) manufactured by Japan Exlan Co., Ltd.

### (Measurement of filtration performance)

Pressure loss was determined by arranging the charges filter material sample in a duct, then controlling the air filtration rate to be 30 cm/sec. and reading the static pressure difference between the upper and lower streams of the filter material with a pressure gauge. The evaluation of the efficiency (%) of collection of particles was carried out at 30 cm/sec by using NaCl particles having a particle diameter of 0.3 µm.

### (Evaluation of combustibility)

Combustibility was evaluated according to JIS D 1201 (1977) method of combustibility test for organic materials disposed in automobile compartment. The number of test sites was 5 in the MD and TD directions respectively of the carding of each filter material.

The evaluation results of fiber constitution, filtration performance and combustibility in Examples 1 to 7 and Comparative Examples 1 to 4 are shown in Table 1. Any charged filter material in the Examples had high efficiency of collection of particles, and in Examples 1 and 4, self extinguishing properties are shown in any sites in the combustibility test. In Comparative Example 1, the charged filter material had high efficiency of collection of particles, but was easily combustible in all the sites in the MD and TD directions in the combustibility test because the acrylic fiber was highly combustible. The charged filter materials in Comparative Examples 2 and 3 had slightly lower efficiency of collection of particles and were observed to be not self-extinguishing at some sites in the combustibility test. In Comparative Example 4, the mixing ratio of the propylene fiber was so low that the efficiency of collection of particles was at low level.

**Table 1**

| | Fiber mixing ratio (mass%) | | | | | | | Efficiency of collection of 0.3 µm particles | Pressure loss (Pa) | Combustibility |
|---|---|---|---|---|---|---|---|---|---|---|
| | NC | A | B | C | D | 707 | K8 | | | |
| Example 1 | 50 | 50 | | | | | | 85 | 20 | Self-extinguishing |
| Example 2 | 50 | | 50 | | | | | 86 | 21 | - |
| Example 3 | 50 | | | 50 | | | | 83 | 21 | - |
| Example 4 | 50 | 20 | | | | 30 | | 77 | 19 | Self-extinguishing |
| Example 5 | 65 | | | 30 | | 5 | | 76 | 20 | - |
| Example 6 | 35 | | | 55 | | 10 | | 73 | 20 | - |
| Example 7 | 50 | | | | 50 | | | 78 | 21 | Self-extinguishing |
| Comparative Example 1 | 50 | | | | | | 50 | 78 | 20 | Easily combustible |
| Comparative Example 2 | 50 | | | | | 50 | | 59 | 21 | Flame-retardant |
| Comparative Example 3 | 60 | 5 | | | | 35 | | 48 | 21 | Flame-retardant |
| Comparative Example 4 | 20 | 70 | | | | 10 | | 35 | 19 | Self-extinguishing |

### INDUSTRIAL APPLICABILITY

The friction-charged filter material of the present invention is excellent in friction chargeability and can thus exhibit high particle collection efficiency with low pressure loss. Further, the friction-charged filter material is a combination of polyester fiber and polyolefin fiber and can thus be easily rendered self-extinguishing in the combustibility classification according to JIS D 1201 (1977) "method of combustibility test for organic materials disposed in automobile compartment", thus providing a filter material applicable to an air filter requiring self-extinguishing properties. In addition, the charged filter material of the present invention does not generate dioxins at the time of incineration and is thus industrially useful as a charged filter material with fewer burdens on the environment.

## Claims

1. A friction-charged filter material comprising at least 20 mass% of polyester fiber containing a phosphinic acid compound and/or sulfonic acid compound and at least 30 mass% of polyolefin fiber.

2. The friction-charged filter material according to claim 1, wherein the phosphinic acid compound and/or sulfonic acid compound is copolymerized with a polyester molecular chain.

3. The friction-charged filter material according to claim 1 or 2, wherein the filter material is self-extinguishing in the combustibility classification according to JIS D 1201 (1977) method of combustibility test for organic materials disposed in automobile compartment.

## Patentansprüche

1. Reibungsgeladenes Filtermaterial, das mindestens 20 Massen-% Polyesterfaser, die eine Phosphinsäureverbindung und/oder Sulfonsäureverbindung enthält, und mindestens 30 Massen-% Polyolefinfaser umfasst.

2. Reibungsgeladenes Filtermaterial nach Anspruch 1, wobei die Phosphinsäureverbindung und/oder Sulfonsäureverbindung mit einer Polyester-Molekülkette copolymerisiert ist.

3. Reibungsgeladenes Filtermaterial nach Anspruch 1 oder 2, wobei das Filtermaterial in der Brennbarkeitsklassifizierung gemäß dem JIS D 1201 (1977) Brennbarkeitstestverfahren für im Kraftfahrzeuginnenraum angeordnete organische Materialien selbstlöschend ist.

## Revendications

1. matériau de filtre à charge de friction comprenant au moins 20 % en poids de fibre de polyester contenant un composé d'acide phosphinique et/ou un composé d'acide sulfonique et au moins 30 % en poids de fibre de polyoléfine.

2. Matériau de filtre à charge de friction selon la revendication 1, dans lequel le composé d'acide phosphinique et/ou le composé d'acide sulfonique est copolymérisé avec une chaîne moléculaire de polyester.

3. Matériau de filtre à charge de friction selon la revendication 1 ou 2, dans lequel le matériau de filtre est auto-extinguible dans la classification de combustibilité selon le procédé JIS D 1201 (1977) du test de combustibilité des matériaux organiques disposés dans un compartiment automobile.
